# EUROPEAN PATENT APPLICATION

(11) **EP 4 703 877 A1**
(43) Date of publication of application: **04.03.2026**
(21) Application number: 24745337.6
(22) Date of filing: 24.04.2024
(51) Int. Cl.: G06F 9/451, G06F 16/332, G06F 16/35, G06F 18/23, G06F 40/30

(54) **INFORMATION PRESENTATION METHOD AND APPARATUS, AND COMPUTER DEVICE AND STORAGE MEDIUM**

(30) Priority: 28.04.2023 CN 202310485327
(71) Applicant: Beijing Zitiao Network Technology Co., Ltd., Beijing 100190 (CN)
(72) Inventor: LIU, Siyu, Beijing 100028 (CN)
(74) Representative: Marks & Clerk LLP
(86) International application number: PCT/CN2024/089555
(87) International publication number: WO 2024/222738

(57) **Abstract**

The embodiments of the present disclosure provide an information display method, an information display apparatus, a computer device, and a storage medium. The information display method includes: displaying a dialogue page for a dialogue between a user and an intelligent robot, the dialogue page including a historical dialogue record; displaying, in response to a view operation on the historical dialogue record in the dialogue page, at least one dialogue topic corresponding to the historical dialogue record, each dialogue topic corresponding to at least one dialogue content; and locating, in response to a triggering operation for any dialogue topic, a current dialogue position in the dialogue page to a position corresponding to the dialogue topic in the historical dialogue record.

## Description

This application claims the priority to Chinese Patent Application No. 202310485327.1 filed on April 28, 2023, the entire disclosure of which is incorporated herein by reference as part of the disclosure of this application.

### TECHNICAL FIELD

Embodiments of the present disclosure relate to an information display method, an information display apparatus, a computer device, and a storage medium.

### BACKGROUND

With the development of artificial intelligence technology, information that users can acquire through the artificial intelligence technology is becoming more and more abundant and accurate. Intelligent robots are tools that can provide users with personalized answers by chatting with the users, that is, the users can get the content they want to know by chatting with the intelligent robots.

The users may make many rounds of dialogues with the intelligent robots and acquire a lot of valuable information from them. Later, the users may need to backtrack the chat content and search for information of interest. However, if there are too many chat contents with the robots, it will become very difficult for the users to backtrack the chat contents.

### SUMMARY

The embodiments of the present disclosure provide at least an information display method, an information display apparatus, a computer device, and a storage medium.

In a first aspect, the embodiments of the present disclosure provide an information display method, and the method includes:
displaying a dialogue page for a dialogue between a user and an intelligent robot, the dialogue page including a historical dialogue record;
displaying, in response to a view operation on the historical dialogue record in the dialogue page, at least one dialogue topic corresponding to the historical dialogue record, each dialogue topic corresponding to at least one dialogue content; and
locating, in response to a triggering operation for any dialogue topic, a current dialogue position in the dialogue page to a position corresponding to the dialogue topic in the historical dialogue record.

In an optional implementation, displaying the dialogue page for the dialogue between the user and the intelligent robot includes: displaying, in response to an artificial intelligence dialogue identifier triggered in a video page, the dialogue page for the dialogue between the user and the intelligent robot; and the dialogue page includes the historical dialogue record corresponding to the video page, or the dialogue page includes the historical dialogue record corresponding to a video set associated with the video page.

In an optional implementation, the dialogue topic is generated according to following steps:
performing semantic feature extraction on each dialogue content in the historical dialogue record, and determining a semantic feature vector representing dialogue content semantics; and clustering each dialogue content based on the semantic feature vector of each dialogue content, and determining each dialogue topic.

In an optional implementation, clustering each dialogue content based on the semantic feature vector of each dialogue content and determining each dialogue topic includes:
computing a semantic relevance between different dialogue contents based on the semantic feature vector of each dialogue content; and
determining each continuous dialogue content under an identical dialogue topic based on the semantic relevance, and determining topic information of the identical dialogue topic based on each continuous dialogue content, the semantic relevance between continuous dialogue contents under the identical dialogue topic being greater than a set threshold value.

In an optional implementation, displaying, in response to the view operation on the historical dialogue record in the dialogue page, at least one dialogue topic corresponding to the historical dialogue record includes:
in response to the view operation on a historical dialogue record identifier in the dialogue page, displaying a dialogue topic window, and sequentially displaying each dialogue topic in the dialogue topic window according to an attribute feature of each dialogue topic, the attribute feature including at least one of: dialogue time, topic popularity, and user search data.

In an optional implementation, locating, in response to the triggering operation for any dialogue topic, the current dialogue position in the dialogue page to the position corresponding to the dialogue topic in the historical dialogue record includes:
in response to the triggering operation for any dialogue topic, sequentially displaying, at a current displayable region in the dialogue page, each dialogue content under the dialogue topic starting from a first dialogue content under the dialogue topic.

In an optional implementation, displaying at least one dialogue topic corresponding to the historical dialogue record includes:
displaying at least one dialogue topic corresponding to the historical dialogue record, and dialogue time information and/or number of dialogue contents corresponding to each dialogue topic, wherein the dialogue time information is used for indicating dialogue starting time or a dialogue time range corresponding to the dialogue topic.

In a second aspect, the embodiments of the present disclosure further provide an information display apparatus, including:
a first display unit, configured to display a dialogue page for a dialogue between a user and an intelligent robot, the dialogue page including a historical dialogue record;
a second display unit, configured to display, in response to a view operation on the historical dialogue record in the dialogue page, at least one dialogue topic corresponding to the historical dialogue record, each dialogue topic corresponding to at least one dialogue content; and
a locating unit, configured to locate, in response to a triggering operation for any dialogue topic, a current dialogue position in the dialogue page to a position corresponding to the dialogue topic in the historical dialogue record.

In a third aspect, the embodiments of the present disclosure further provide a computer device, including a processor, a memory, and a bus; the memory stores machine-readable instructions executable by the processor; when the computer device is in operation, the processor is communicated with the memory through the bus; and the machine-readable instructions, when executed by the processor, are configured to execute steps in the first aspect or any possible implementation of the first aspect.

In a fourth aspect, the embodiments of the present disclosure further provide a computer-readable storage medium, the computer-readable storage medium stores a computer program, and the computer program, when executed by a processor, is configured to execute steps in the first aspect or any possible implementation of the first aspect.

In order to make the above-mentioned objectives, features and advantages of the present disclosure more obvious and easy to understand, preferred embodiments are specifically provided below and described in detail with reference to the accompanying drawings.

### BRIEF DESCRIPTION OF DRAWINGS

In order to more clearly illustrate the technical solutions of the embodiments of the present disclosure, the drawings that need to be used in the embodiments will be briefly introduced in the following. The drawings here are incorporated into the specification and form a part of this specification, and these drawings show embodiments that comply with the present disclosure and are used together with the specification to illustrate the technical solution of the present disclosure. It should be understood that the following drawings only show some embodiments of the present disclosure and thus should not be considered as limiting the scope. For those skilled in the art, other relevant drawings can be obtained based on these accompanying drawings without inventive efforts.
Fig. 1 illustrates a flowchart of an information display method provided by an embodiment of the present disclosure;
Fig. 2 illustrates a schematic diagram of displaying a dialogue page for a dialogue between a user and an intelligent robot provided by an embodiment of the present disclosure;
Fig. 3 illustrates a schematic diagram of displaying at least one dialogue topic corresponding to a historical dialogue record provided by an embodiment of the present disclosure;
Fig. 4(a) illustrates a schematic diagram of displaying each dialogue content under a dialogue topic in response to a triggering operation on the dialogue topic provided by an embodiment of the present disclosure;
Fig. 4(b) illustrates another schematic diagram of displaying each dialogue content under a dialogue topic in response to a triggering operation on the dialogue topic provided by an embodiment of the present disclosure;
Fig. 5 illustrates a schematic diagram of an information display apparatus provided by an embodiment of the present disclosure; and
Fig. 6 illustrates a schematic diagram of a computer device provided by an embodiment of the present disclosure.

### DETAILED DESCRIPTION

In order to clarify the objectives, technical solutions, and advantages of the embodiments of the present disclosure, the technical solutions in the embodiments of the present disclosure will be clearly and completely described with reference to the accompanying drawings in the embodiments of the present disclosure. Obviously, the described embodiments are only a part of the embodiments of the present disclosure, not all of the embodiments. The components of the embodiments of the present disclosure which are described and shown in the accompanying drawings here may usually be arranged and designed in a variety of different configurations. Therefore, the following detailed description of the embodiments of the present disclosure provided in the accompanying drawings is not intended to limit the protection scope of the present disclosure, but merely indicates selected embodiments of the present disclosure. Based on the embodiments of the present disclosure, all other embodiments obtained by those skilled in the art without inventive efforts are within the protection scope of the present disclosure.

It should be noted that similar numerals and letters indicate similar items in the accompanying drawings below. Thus, once a certain item is defined in one accompanying drawing, it does not need to be further defined and explained in subsequent accompanying drawings.

The term "and/or" here merely describes an association, indicating that there can be three kinds of relationships. For example, A and/or B may represent that: A exists alone, A and B both exist, and B exists alone. In addition, the term "at least one" here represents any one of a variety or any combination of at least two of a variety. For example, including at least one of A, B, and C may represent any one or more elements selected from a group composed of A, B, and C.

It can be understood that before using the technical solution disclosed in each embodiment of the present disclosure, it is needed to inform users about the type, scope of use, and use scenes of the personal information involved in the present disclosure and gain the authorization of the users through appropriate methods in accordance with relevant laws and regulations.

Studies have found that the users can chat with intelligent robots to acquire the content the users want to know. When there are too many chat contents between the user and the robot, it becomes very difficult for the user to backtrack the chat content.

Sometimes it is possible to backtrack the contents of chat by categorizing them, for example, by categorizing chat contents according to at least the following information: date, image/video, link, or the like. However, this backtracking mode of chat contents is to stack the chat contents of a certain category and display together, thus the user cannot quickly and accurately locate the chat content of interest from the stacked contents, which may affect the accuracy and efficiency of chat content backtracking.

Alternatively, the chat content can also be backtracked by searching for chat keywords, but this method requires the user to accurately remember at least part of the chat content. When the chat content to be backtracked is far away from the current time, it is particularly difficult to backtrack the chat content by searching for chat keywords.

Based on the above studies, the embodiments of the present disclosure provide an information display method, an information display apparatus, a computer device, and a storage medium. As described above, in the embodiments of the present disclosure, after a dialogue page for a dialogue with an intelligent robot is displayed, at least one dialogue topic corresponding to a historical dialogue record is displayed in response to a view operation on the historical dialogue record in the dialogue page, and the dialogue topic may correspond to at least one dialogue content, so that the user can clearly see some topics of the dialogue with the intelligent robot and can also conveniently locate to the specific topic position. That is, in response to a triggering operation on any dialogue topic, a current dialogue position in the dialogue page can be located to a position corresponding to the dialogue topic in the historical dialogue record, so that the dialogue content of interest can be conveniently and quickly located through the dialogue topic, and the user does not need to remember the keywords of the dialogue to search for the dialogue content of interest only through keywords, thereby improving the searching efficiency of the dialogue content and improving the intelligent experience of dialogue with the intelligent robot.

In order to facilitate understanding on this embodiment, the information display method disclosed by the embodiments of the present disclosure is firstly described in detail, and an execution object of the information display method provided by the embodiments of the present disclosure is generally a computer device with certain computing capability.

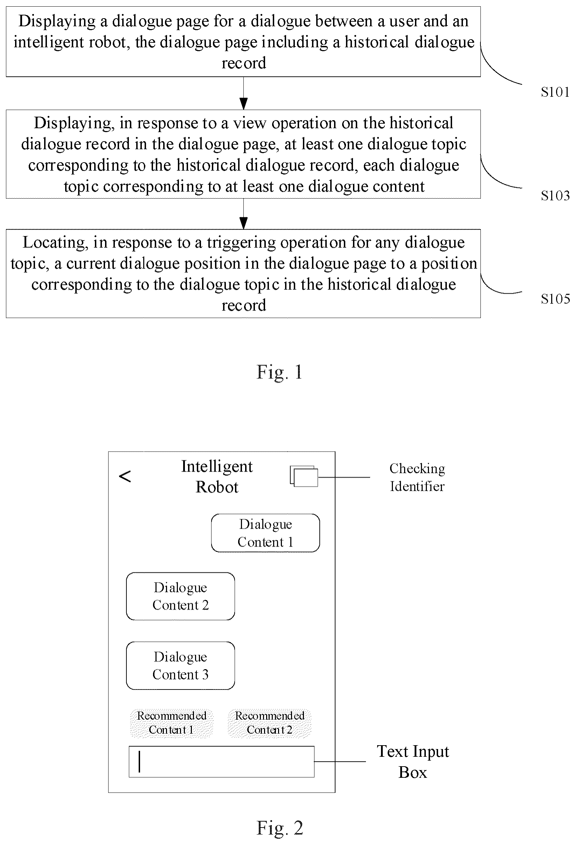

With reference to Fig. 1, Fig. 1 is a flowchart of an information display method provided by an embodiment of the present disclosure, and the information display method includes steps S101 to S105.

S101: displaying a dialogue page for a dialogue between a user and an intelligent robot, the dialogue page including a historical dialogue record.

In the embodiments of the present disclosure, after a dialogue instruction triggered by the user on a current browsing page for making a dialogue with the intelligent robot is detected, the dialogue page for the dialogue between the user and the intelligent robot is displayed.

The current browsing page may be a multimedia content display page, such as a video playing page (i.e., a video page), a search result aggregation page, a home page of an application program, etc. The present disclosure does not make any specific limitation on the current browsing page, and is based on the dialogue instruction that can trigger the dialogue with the intelligent robot on the current browsing page.

In the embodiments of the present disclosure, the user can trigger the dialogue instruction in any one of the following situations: the user triggers an artificial intelligence dialogue identifier on the current browsing page, the user pulls down the current browsing page to activate the intelligent robot, the user activates the intelligent robot through a voice instruction, or other preset operations for activating the intelligent robot to make a dialogue may also be performed, such as clicking the current browsing page by three clicks with one finger.

In the embodiments of the present disclosure, the dialogue page displayed after detecting that the user triggers the dialogue instruction for making a dialogue with the intelligent robot may include the historical dialogue record after the dialogue between the user and the intelligent robot. Here, the historical dialogue record may include at least one dialogue content of the dialogue between the user and the intelligent robot based on the content of a page being browsed on the browsing page (that is, the current browsing page) before the current moment, or the historical dialogue record may also include at least one dialogue content of the dialogue between the user and the intelligent robot based on the content of the page being browsed on the browsing page and the content associated with the content of the page being browsed before the current moment, or the historical dialogue record may also include all dialogue contents of the dialogue between the user and the intelligent robot within a preset time period (e.g., one month, one year, or the like) before the current moment. For example, the historical record may include the historical dialogue record obtained after the user makes one or more dialogues with the intelligent robot when browsing a page (a video page or any page in an application) in the application. Here it is assumed that the user makes multiple dialogues with the intelligent robot, and the multiple dialogues may be multiple dialogues made by the user with the intelligent robot at different time points in the same day (that is, the same date), or may also be multiple dialogues made by the user with the intelligent robot at different dates.

Here, all dialogue contents of the dialogue between the user and the intelligent robot can be summarized, so that the user can skip to the dialogue page for the dialogue with the intelligent robot from any page in the application to directly view all historical dialogue records (also within set valid time) of the dialogue with the intelligent robot, thus avoiding the problem that the historical dialogue records are incomplete due to different dialogue time.

In a possible implementation, before detecting that the user triggers the dialogue instruction to make a dialogue with the intelligent robot, and when the browsing page of the user is the video page, the dialogue page for the dialogue between the user and the intelligent robot can be displayed in response to the artificial intelligence dialogue identifier triggered in the video page. In this case, the dialogue page includes the historical dialogue record corresponding to the video page, or includes the historical dialogue record corresponding to the video set associated with the video page. Here, the video set associated with the video page may include multiple videos having an association relationship with the video played on the video page. The association relationship here may be that the multiple videos correspond to the played video by the same event, the same entity object, the same video author, or the like.

When the historical dialogue record corresponding to the video set associated with the video page is included in the dialogue page, the historical dialogue record may include: the historical dialogue record obtained by summarizing all the historical dialogue records corresponding to respective videos in the video set.

In this case, it is assumed that when the page content being browsed is an "introduction video of A," the historical dialogue record of the dialogue page displayed after detecting the triggering of the dialogue instruction may include the dialogue content of the dialogue between the user and the intelligent robot based on the "introduction video of A" before the current time. Alternatively, the historical dialogue record of the displayed dialogue page may also include the dialogue content of the dialogue between the user and the intelligent robot based on the "introduction video of A" and a "work set of A" (here the "work set of A" is the content associated with the "introduction video of A") before the current time.

In this implementation, more dialogue contents associated with the video page can be provided for the user, so that more choices can be provided for the user to view the historical dialogue record, so as to reduce the time for the user to search for the dialogue contents of other video pages associated with the video page, thus improving the use experience of the user viewing the historical dialogue record.

In the aspect of technical implementation, if the dialogue page includes the historical dialogue record corresponding to a specific video page, it can be considered that the intelligent robot (i.e., an artificial intelligence model) takes the video as a recording unit of the historical dialogue record, that is, each video corresponds to one chat window. If the dialogue page includes the historical dialogue record corresponding to the video set, it can be considered that the intelligent robot takes the video set as the recording unit of the historical dialogue record, that is, each video set corresponds to one chat window. The user can view the historical dialogue records corresponding to multiple videos in the video set from the chat window, that is, when the video pages of the multiple videos respectively enter the dialogue page for the dialogue with the intelligent robot, the displayed dialogue window includes the historical dialogue records associated with the multiple videos (the historical dialogue records associated with the multiple videos, that is, the dialogue records of the dialogue performed by the user entering the dialogue page for the dialogue with the intelligent robot from the video pages of the multiple videos).

As described above, in a possible implementation, before detecting that the user triggers the dialogue instruction for the dialogue with the intelligent robot, and when the browsing page of the user is any page of the application (which can be considered as the application corresponding to the intelligent robot), the dialogue page for the dialogue between the user and the intelligent robot can be displayed in response to the artificial intelligence dialogue identifier triggered in any page of the application. Here the dialogue page may include all dialogue contents of the dialogue between the user and the intelligent robot within a preset time period (e.g., one month, one year, or the like, specifically set according to storage requirements) before the current moment.

That is, if the dialogue page includes all the dialogue contents of the dialogue between the user and the intelligent robot within the preset time period, the intelligent robot (i.e., the artificial intelligence model) can be considered to take the user (or account information of the user logged in the application) as the recording unit of the historical dialogue record (not the video or video set introduced in the previous implementation as the recording unit), and the user can view each historical dialogue record of historical dialogue between the user and the intelligent robot in the application through the chat window for the dialogue with the intelligent robot.

In the embodiments of the present disclosure, after the dialogue page is displayed, a part of historical dialogue records closest to the current moment can be displayed in the dialogue page.

Exemplarily, the displayed dialogue page may be as shown in Fig. 2, and the part of historical dialogue records displayed closest to the current moment in the dialogue page may be: dialogue content 1, dialogue content 2, dialogue content 3, and the like.

As shown in Fig. 2, the displayed dialogue page may further include a text input box, so that the user can input the dialogue content of the dialogue with the intelligent robot in the text input box.

As shown in Fig. 2, the displayed dialogue page may further include at least one pre-generated recommended dialogue content, that is, recommended content 1 and recommended content 2 as shown in Fig. 2. The user can trigger the displayed recommended dialogue content so as to transmit the recommended dialogue content to the dialogue page for the dialogue with the intelligent robot to achieve a quick dialogue with the intelligent robot.

In specific implementation, there can be various methods for determining the recommended dialogue content in the dialogue page. For example, in one method, if the dialogue page is displayed after the artificial intelligence dialogue identifier on the video page is triggered, the historical search records related to the video or video set associated with the video can be acquired, and then subjected to clustering analysis to obtain the search information with relatively high popularity as the recommended dialogue content described above.

For another example, in another method, the current input content of the user on the dialogue page can be acquired, specifically, including the content actively input by the user, or including reply information for guiding questions of the intelligent robot. The dialogue tendency category of the user can be determined based on the input content, and thus the recommended dialogue content described above can be determined based on the dialogue tendency category.

The dialogue tendency category described above can be used for indicating the dialogue content which the user is interested in. For example, when at least part of the acquired input content of the user on the dialogue page is mostly to query person introduction or person deeds, the dialogue tendency category of the user can be determined to be the tendency of knowing person-related information. Thus, the recommended dialogue content determined based on the dialogue tendency may be the person introduction of a person included in the page content browsed by the user, for example, the recommended dialogue content may be the "introduction of XXX," "deeds of XXX," or the like. For another example, when the input content is mostly to query scenic spot information, tourist attractions, or the like, the dialogue tendency category of the user can be determined to be the tendency of travel information. Thus, the recommended dialogue content determined based on the dialogue tendency category can be scenic spot information, travel strategies, or the like of the scenic spot near the place contained in the page content browsed by the user, and the recommended dialogue content may be "scenic spot ranking of XX," "travel strategy of XX," or the like.

When the user wants to view the historical dialogue record, a view operation on the historical dialogue record in the dialogue page may be triggered (for example, the historical dialogue record checking identifier in the dialogue page as shown in Fig. 2 may be triggered), and the following steps S103 to S105 are executed.

S103: displaying, in response to a view operation on the historical dialogue record in the dialogue page, at least one dialogue topic corresponding to the historical dialogue record, each dialogue topic corresponding to at least one dialogue content.

Here the dialogue topic may indicate a dialogue content topic, and/or dialogue content keywords.

In the embodiments of the present disclosure, the topic of the historical dialogue record can be extracted so as to obtain at least one dialogue topic corresponding to the historical dialogue record.

Here the granularity of the dialogue topic, that is, the scope of the content included, can be determined according to the content distribution of the historical dialogue record. For example, if the historical dialogue record relates to various field directions, the dialogue content keywords of each dialogue content in the historical dialogue record can be extracted, and at least one dialogue topic corresponding to the historical dialogue record is determined based on the dialogue content keywords.

For another example, if the historical dialogue record relates to different refinement aspects in one field direction, each dialogue content can be subjected to finer-granularity clustering analysis. For example, when the dialogue content is about football, the dialogue content can be clustered to finer-granularity dimensions such as athletes, world cups, football benches, etc. During specific clustering, the granularity and the clustering dimension information can be controlled by setting the clustering capacity (the dialogue content number threshold included in each category) and the number of clustering categories.

By clustering all dialogue contents, the user can conveniently locate to the historical dialogue contents under a certain topic of interest, view the dialogue contents under the topic in a centralized mode, and extract key information required by the user for the topic.

For example, after the user makes a dialogue with the intelligent robot for a certain topic A at a certain time, and the user makes a dialogue for other topics in the middle and then makes a dialogue with the intelligent robot for the topic A again, the dialogue contents corresponding to the same topic (such as the topic A) may be discontinuous dialogue contents. Thus, the dialogue contents are clustered so that the dialogue contents corresponding to the same topic can be gathered, and thus the user can greatly conveniently query the dialogue contents and extract the key information.

In an optional implementation, the dialogue topic corresponding to the historical dialogue record can be generated according to the following steps.

Firstly, semantic feature extraction is performed on each dialogue content in the historical dialogue record, and a semantic feature vector representing dialogue content semantics is determined.

Here a pre-trained model can be used to extract the semantic feature of each dialogue content in the historical dialogue record to obtain the semantic feature vector, so that the semantic feature vector can be quickly and accurately determined. The trained model can be a Latent Dirichlet allocation (LDA) model.

In the embodiments of the present disclosure, when there is a large number of initial semantic feature vectors determined by the pre-trained model, the multiple initial semantic feature vectors can be screened according to preset screening features (such as data popularity, data search times, data search duration, etc.) to obtain semantic feature vectors meeting the requirements.

Then, each dialogue content is clustered based on the semantic feature vector of each dialogue content so as to determine each dialogue topic based on the clustered dialogue content.

In specific implementation, semantic relevance between different dialogue contents can be computed based on the semantic feature vector of each dialogue content.

The semantic relevance between the dialogue contents can be determined by computing the semantic similarity between the semantic feature vectors corresponding to respective dialogue contents.

The method of computing the semantic similarity between the semantic feature vectors may be to compute the semantic similarity through the distance (such as a Minkowski distance, a Chebyshev distance, an Euclidean distance, or the like) between the semantic feature vectors, for example, the distance may be: a cosine distance, an Euclidean distance, a Minkowski distance, a Chebyshev distance, or the like.

After the semantic relevance between different dialogue contents is computed, each continuous dialogue content under the same dialogue topic can be determined based on the semantic relevance, and then the topic information of the same dialogue topic is determined based on each continuous dialogue content. Here the semantic relevance between the continuous dialogue contents under the same dialogue topic is greater than a set threshold value.

Here, the set threshold value can be 0.8, 0.7, or the like, and the set threshold value can be set based on the actual condition of the semantic relevance, which is not specifically limited here.

Here, each continuous dialogue content under the same dialogue topic may include multiple dialogue contents with continuous dialogue time, and/or multiple dialogue contents with discontinuous dialogue time.

In the embodiments of the present disclosure, after each continuous dialogue content under the same dialogue topic is determined, the content key information of the continuous dialogue content can be extracted, and each piece of content key information is summarized to obtain the topic information of the same dialogue topic. The topic information may be the content key information (that is, the dialogue content keywords), and may also be the information obtained by summarizing the content key information (that is, the dialogue content topic described above). Thus, the dialogue content topic can correspond to one or more dialogue content keywords.

After each dialogue content is clustered, invalid content elimination processing can be carried out on each clustered dialogue content under each category, thus preventing the efficiency of browsing valid contents from being influenced by excessive invalid information. Specifically, the invalid content elimination processing can be carried out according to the semantic relevance between the clustered topic information of the dialogue topic and each dialogue content under the category.

Specifically, when the same dialogue topic includes multiple dialogue contents with continuous dialogue time, it is assumed that the historical dialogue record includes a target dialogue content which is within the continuous dialogue time corresponding to the dialogue topic described above and has the semantic relevance with the topic information of the same dialogue topic being smaller than the set threshold value, it can be determined that the target dialogue content does not belong to valid dialogue content under the same dialogue topic. In this case, in response to the triggering operation on the dialogue topic, each displayed dialogue content may not include the target dialogue content, so that the quality of each clustered displayed dialogue content under the dialogue topic can be improved.

Under some conditions, there may be such a situation: after the user makes a dialogue with the intelligent robot for a certain topic A at a certain time, the user makes a dialogue of other topics in the middle and then makes a dialogue with the intelligent robot for the topic A again. In this case, the two dialogues for the topic A can be divided into different dialogue topics (which can be distinguished by digital numerals, such as a dialogue topic A-1 and a dialogue topic A-2), so that the dialogue records can be located conveniently. The two dialogues for the topic A can also be classified into the same dialogue topic. Thus, after the dialogue topic is triggered, the historical dialogue record can be located at the first dialogue position for the dialogue topic, and prompt information is displayed at the first dialogue position to prompt the user that there is a second dialogue for the dialogue topic, and the user can trigger the prompt information to be located to the second dialogue position.

In the embodiments of the present disclosure, after the dialogue topic corresponding to the historical dialogue record is generated according to the above steps, at least one dialogue topic corresponding to the historical dialogue record can be displayed in response to the view operation on the historical dialogue record identifier in the dialogue page.

In specific implementation, in response to the view operation on the historical dialogue record identifier in the dialogue page, a new obscuration can be generated, and a dialogue topic window is displayed in the new obscuration. In the dialogue topic window, all dialogue topics are displayed in sequence according to attribute features of respective dialogue topics, and the attribute feature includes at least one of: dialogue time, topic popularity, and user search data.

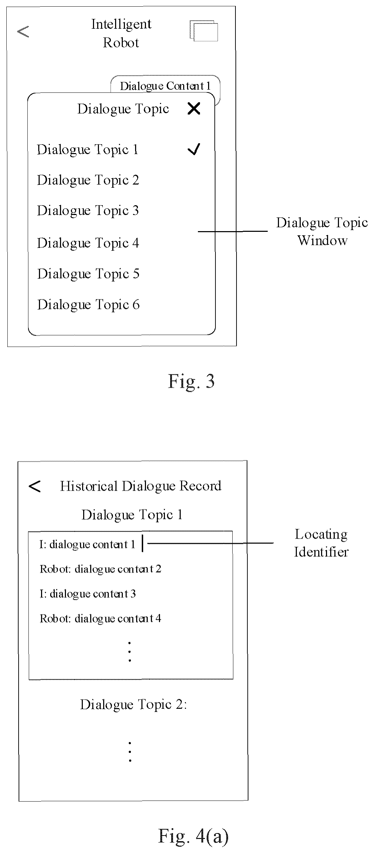

Exemplarily, the displayed dialogue topic window can be shown as Fig. 3. The dialogue topic window as shown in Fig. 3 can be rectangular, and the multiple dialogue topics are displayed in the dialogue topic window with black fonts. It needs to be noted here that the present disclosure does not impose specific limitations on the display style of the dialogue topic window, subject to implementation.

As described above, the dialogue topic may include a dialogue content topic and/or dialogue content keywords, and moreover, the dialogue content topic can correspond to one or more dialogue content keywords. Therefore, when at least one dialogue topic corresponding to the historical dialogue record is displayed and the dialogue topic includes both the dialogue content topic and the dialogue content keywords, the dialogue content topic can be preferentially displayed, and then the dialogue content keywords are displayed, or the dialogue content topic and the dialogue content keywords can be displayed at the same time.

Alternatively, after the dialogue content topic is generated, a corresponding sub-window can be set for each dialogue content topic, and after the triggering operation on the dialogue content topic is detected, at least one dialogue content keyword corresponding to the dialogue content topic is displayed in the sub-window.

In an optional implementation, the dialogue topic window can further include attribute features corresponding to respective dialogue topics. For example, the attribute feature can be labeled behind the corresponding dialogue topic, so as to provide richer information for the user. Here the attribute feature includes at least one of: dialogue time, topic popularity, and user search data.

In another optional implementation, the dialogue topic window described above may further include a refresh identifier, so that when the user does not find out the dialogue topic of interest based on the current dialogue topic window, the dialogue topic displayed in the dialogue topic window can be updated by triggering the refresh identifier.

In still another optional implementation, after the dialogue topic corresponding to the historical dialogue record is generated according to the above steps in the embodiments of the present disclosure, in response to the view operation on the historical dialogue record identifier in the dialogue page, at least one dialogue topic corresponding to the historical dialogue record, as well as the dialogue time information and/or the number of dialogue content items corresponding to each dialogue topic can be displayed. The dialogue time information is used for indicating the dialogue starting time or dialogue time range corresponding to the dialogue topic.

In the implementations described above, in response to the view operation on the historical dialogue record in the dialogue page, at least one dialogue topic corresponding to the historical dialogue record can be displayed, so that the user can conveniently and concisely know the content in the historical dialogue record through the displayed dialogue topic, and thus can accurately and quickly determine the dialogue content of interest.

In the embodiments of the present disclosure, the user can trigger the displayed dialogue topic and execute the following step in S105.

After detecting that the user triggers the displayed dialogue topic, a trigger identifier can be added to the triggered dialogue topic (for example, as shown in Fig. 3, when the triggered dialogue topic is the dialogue topic 1, a tick identifier can be added to the dialogue topic 1 to identify that the dialogue topic is triggered), and then the following step described in S105 is executed.

S105: locating, in response to a triggering operation for any dialogue topic, a current dialogue position in the dialogue page to a position corresponding to the dialogue topic in the historical dialogue record.

Here the position corresponding to the dialogue topic in the historical dialogue record can be understood as the position of each continuous dialogue content under the dialogue topic in the historical dialogue record.

In the embodiments of the present disclosure, in response to the triggering operation for any dialogue topic, the dialogue page can be displayed, and the dialogue contents under the dialogue topic can be sequentially displayed, starting from the first dialogue content under the dialogue topic, at a current displayable region in the dialogue page.

In the embodiments of the present disclosure, after each dialogue content under the triggered dialogue topic is displayed, each dialogue content under the next dialogue topic can be continuously displayed by triggering a sliding operation on the current dialogue page.

Exemplarily, as shown in Fig. 4(a), in response to the triggering operation for the dialogue topic 1, each dialogue content under the dialogue topic 1 can be displayed at a displayable region in the dialogue page, that is, the dialogue content 1, the dialogue content 2, the dialogue content 3, and the dialogue content 4. The displayable region in the dialogue page may include the locating identifier for indicating the first dialogue content under the triggered dialogue topic. For example, as shown in Fig. 4(a), the locating identifier is located behind the first dialogue content (the dialogue content 1) under the dialogue topic 1.

Then, in response to the sliding operation on the dialogue page, each dialogue content under the dialogue topic 2 behind the dialogue topic 1 can be continuously displayed.

When the dialogue topic indicates the dialogue content keywords, and each dialogue content under the dialogue content keywords is displayed, the content matched with the dialogue content keywords in the dialogue content can be marked. For example, the content matched with the dialogue content keywords in the first dialogue content under the dialogue content keywords can be marked yellow, or the content matched with the dialogue content keywords in each dialogue content under the dialogue content keywords can be marked yellow, so that the key information included in the dialogue content can be prompted to the user more strikingly, thus improving the dialogue content browsing efficiency of the user.

In another method, when the dialogue topic indicates the dialogue content topic, each dialogue content under the dialogue content topic can be summarized and analyzed, and structural display is performed according to dialogue content keywords corresponding to the dialogue content topic.

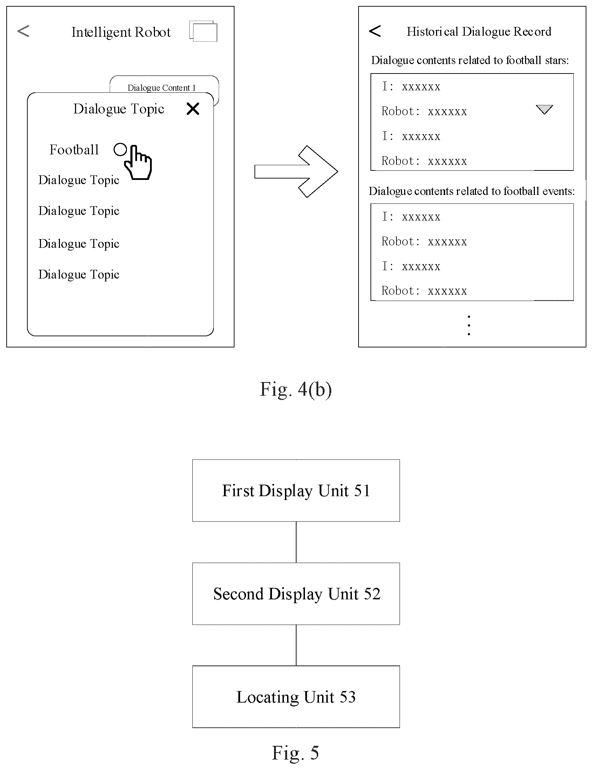

Exemplarily, as shown in Fig. 4(b), it is assumed that the dialogue content topic is football and the dialogue content keywords corresponding to the dialogue content topic are football stars, football events, and football clothes, each dialogue content can be displayed in the dialogue page according to the respective dialogue content keywords, and each displayed dialogue content is as shown in Fig. 4(b), the dialogue contents related to the football stars are as follows: "I (i.e., the user): xxxxxx; Robot (i.e., the intelligent robot): xxxxxx; I: xxxxxx; Robot: xxxxxx" and the dialogue contents related to the football events are as follows: "I: xxxxxx; Robot: xxxxxx; I: xxxxxx; Robot: xxxxxx."

Here the dialogue contents related to the football stars include eliminated invalid contents, and when the user wants to view the eliminated invalid contents, the user can trigger an expansion identifier as shown in Fig. 4(b) (that is, an inverted triangle identifier in Fig. 4(b)) to view the eliminated contents.

As described above, in the embodiments of the present disclosure, after a dialogue page for a dialogue with an intelligent robot is displayed, at least one dialogue topic corresponding to a historical dialogue record is displayed in response to a view operation on the historical dialogue record in the dialogue page, and the dialogue topic may correspond to at least one dialogue content, so that the user can clearly see some topics of the dialogue with the intelligent robot and can also conveniently locate to the specific topic position. That is, in response to a triggering operation on any dialogue topic, a current dialogue position in the dialogue page can be located to a position corresponding to the dialogue topic in the historical dialogue record, so that the dialogue content of interest can be conveniently and quickly located through the dialogue topic, and the user does not need to remember the keywords of the dialogue to search for the dialogue content of interest only through keywords, thereby improving the searching efficiency of the dialogue content and improving the intelligent experience of dialogue with the intelligent robot.

Those skilled in the art may understand that in the above-mentioned method of specific implementations, the writing order of each step does not imply a strict order of execution to constitute any limitation on the implementation process, and the specific order of execution of each step shall be determined by its function and possible internal logic.

Based on the same invention concept, the embodiments of the present disclosure further provide an information display apparatus corresponding to the information display method. Because the principle of the apparatus in the embodiments of the present disclosure for solving problems is similar to that of the above information display method in the embodiments of the present disclosure, the implementation of the apparatus can refer to the implementation of the method, which will not be repeated here.

With reference to Fig. 5, Fig. 5 is a schematic diagram of an information display apparatus provided by an embodiment of the present disclosure. The information display apparatus includes: a first display unit 51, a second display unit 52, and a locating unit 53.

The first display unit 51 is configured to display a dialogue page for a dialogue between a user and an intelligent robot, and the dialogue page includes a historical dialogue record.

The second display unit 52 is configured to display, in response to a view operation on the historical dialogue record in the dialogue page, at least one dialogue topic corresponding to the historical dialogue record, and each dialogue topic corresponds to at least one dialogue content.

The locating unit 53 is configured to locate, in response to a triggering operation for any dialogue topic, a current dialogue position in the dialogue page to a position corresponding to the dialogue topic in the historical dialogue record.

In the embodiments of the present disclosure, after a dialogue page for a dialogue with an intelligent robot is displayed, at least one dialogue topic corresponding to a historical dialogue record is displayed in response to a view operation on the historical dialogue record in the dialogue page, and the dialogue topic may correspond to at least one dialogue content, so that the user can clearly see some topics of the dialogue with the intelligent robot and can also conveniently locate to the specific topic position. That is, in response to a triggering operation on any dialogue topic, a current dialogue position in the dialogue page can be located to a position corresponding to the dialogue topic in the historical dialogue record, so that the dialogue content of interest can be conveniently and quickly located through the dialogue topic, and the user does not need to remember the keywords of the dialogue to search for the dialogue content of interest only through keywords, thereby improving the searching efficiency of the dialogue content and improving the intelligent experience of dialogue with the intelligent robot.

In a possible implementation, the first display unit 51 is further configured to:
display, in response to an artificial intelligence dialogue identifier triggered in a video page, the dialogue page for the dialogue between the user and the intelligent robot, the dialogue page including the historical dialogue record corresponding to the video page or including the historical dialogue record corresponding to a video set associated with the video page.

In a possible implementation, the apparatus is further configured to:
perform semantic feature extraction on each dialogue content in the historical dialogue record, and determine a semantic feature vector representing dialogue content semantics; and
cluster each dialogue content based on the semantic feature vector of each dialogue content, and determine each dialogue topic.

In a possible implementation, the apparatus is further configured to:
compute a semantic relevance between different dialogue contents based on the semantic feature vector of each dialogue content; and
determine each continuous dialogue content under an identical dialogue topic based on the semantic relevance, and determine topic information of the identical dialogue topic based on each continuous dialogue content, where the semantic relevance between continuous dialogue contents under the identical dialogue topic is greater than a set threshold value.

In a possible implementation, the second display unit 52 is further configured to:
in response to the view operation on a historical dialogue record identifier in the dialogue page, display a dialogue topic window, and sequentially display each dialogue topic in the dialogue topic window according to an attribute feature of each dialogue topic, the attribute feature including at least one of: dialogue time, topic popularity, and user search data.

In a possible implementation, the locating unit 53 is further configured to:
in response to the triggering operation for any dialogue topic, sequentially display, at a current displayable region in the dialogue page, each dialogue content under the dialogue topic starting from a first dialogue content under the dialogue topic.

In a possible implementation, the second display unit 52 is further configured to:
display at least one dialogue topic corresponding to the historical dialogue record, and dialogue time information and/or number of dialogue contents corresponding to each dialogue topic, the dialogue time information being used for indicating dialogue starting time or a dialogue time range corresponding to the dialogue topic.

The description of processing flow of each module in the apparatus and the description of interaction flow between the modules can refer to the related description in the embodiments of the method described above, which will not be described in detail here.

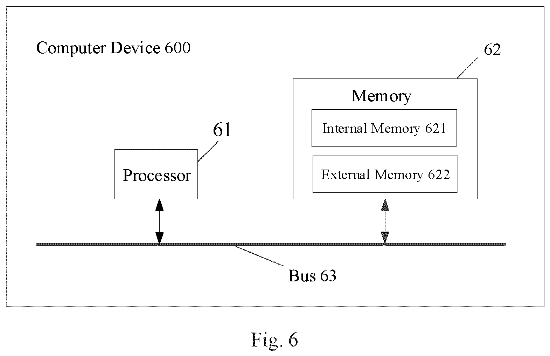

Corresponding to the information display method in Fig. 1, the embodiments of the present disclosure further provide a computer device 600. As shown in Fig. 6, Fig. 6 is a schematic structural diagram of a computer device 600 provided by an embodiment of the present disclosure, and the computer device 600 includes:
a processor 61, a memory 62, and a bus 63; the memory 62 is configured to store execution instructions and includes an internal memory 621 and an external memory 622; here the internal memory 621 is also referred to as an internal storage and is configured to temporarily store operation data in the processor 61 and data exchanged with the external memory 622, such as a hard disk; the processor 61 exchanges data with the external memory 622 through the internal memory 621; and when the computer device 600 is in operation, the processor 61 communicates with the memory 62 through the bus 63, and the processor 61 is caused to execute the following instructions:
displaying a dialogue page for a dialogue between a user and an intelligent robot, the dialogue page including a historical dialogue record;
displaying, in response to a view operation on the historical dialogue record in the dialogue page, at least one dialogue topic corresponding to the historical dialogue record, each dialogue topic corresponding to at least one dialogue content; and
locating, in response to a triggering operation for any dialogue topic, a current dialogue position in the dialogue page to a position corresponding to the dialogue topic in the historical dialogue record.

The embodiments of the present disclosure further provide a computer-readable storage medium, and a computer program is stored on the computer-readable storage medium. The computer program, when executed by a processor, is configured to perform steps of the information display method in the method embodiments described above. The storage medium can be a volatile or non-volatile computer-readable storage medium.

Those skilled in the art can clearly understand that for the convenience and simplicity of description, the specific working processes of the above-described system and apparatus can be with reference to the corresponding process descriptions in the foregoing method embodiments, which will not be repeated here. In the several embodiments provided in the present disclosure, it should be understood that the disclosed system, apparatus and method may be implemented in other manners. The apparatus embodiments described above are merely exemplary. For example, the division of units is merely the division of logic functions, and may use other division manners during actual implementation. For another example, multiple units or components may be combined, or may be integrated into another system, or some features may be omitted or not performed. In addition, the displayed or discussed mutual couplings or direct couplings or communication connections may be implemented through some communication interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments.

In addition, each functional unit in each embodiment of the present disclosure may be integrated into one processing unit, or each of the units may be physically separated, or two or more units may be integrated into one unit.

If the function is implemented in a form of a software functional unit and sold or used as an independent product, it can be stored in a non-volatile computer-readable storage medium that can be executed by the processor. Based on such an understanding, the technical solutions of the present disclosure essentially, or a part contributing to the prior art, or a part of the technical solution may be implemented in a form of a software product. The computer software product is stored in a storage medium and includes several instructions used for instructing one computer device (which may be a personal computer, a server, a network device, or the like) to implement all or some of steps of the method according to each embodiment of the present disclosure. The above-mentioned storage medium includes: a U disk, a mobile hard disk, a read-only memory (ROM), a random access memory (RAM), a magnetic disk, an optical disc, or other media that may store program codes.

Finally, it should be noted that the above-mentioned embodiments are only specific implementations of the present disclosure, which are used for illustrating the technical solutions of the present disclosure, but not to limit them. The protection scope of the present disclosure is not limited to this. Although the present disclosure is described in detail with reference to the above-mentioned embodiments, it should be understood by those skilled in the art that, within the technical scope of the present disclosure, any person familiar with this technical field can still modify or easily think of changes to the technical solutions recorded in the above-mentioned embodiments, or make equivalent replacement of some of the technical features. However, these modifications, changes or substitutions do not make the essence of the corresponding technical solution deviate from the spirit and scope of the technical solution of the embodiments of the present disclosure, and should be contained in the protection scope of the present disclosure. Therefore, the scope of protection of the present disclosure should be based on the scope of protection of the claims.

## Claims

1. An information display method, comprising:
displaying a dialogue page for a dialogue between a user and an intelligent robot, wherein the dialogue page comprises a historical dialogue record;
displaying, in response to a view operation on the historical dialogue record in the dialogue page, at least one dialogue topic corresponding to the historical dialogue record, wherein each dialogue topic corresponds to at least one dialogue content; and
locating, in response to a triggering operation for any dialogue topic, a current dialogue position in the dialogue page to a position corresponding to the dialogue topic in the historical dialogue record.

2. The method according to claim 1, wherein displaying the dialogue page for the dialogue between the user and the intelligent robot comprises:
displaying, in response to an artificial intelligence dialogue identifier triggered in a video page, the dialogue page for the dialogue between the user and the intelligent robot, wherein the dialogue page comprises the historical dialogue record corresponding to the video page, or the dialogue page comprises the historical dialogue record corresponding to a video set associated with the video page.

3. The method according to claim 1 or 2, wherein generating the dialogue topic comprises:
performing semantic feature extraction on each dialogue content in the historical dialogue record, and determining a semantic feature vector representing dialogue content semantics; and
clustering each dialogue content based on the semantic feature vector of each dialogue content, and determining each dialogue topic.

4. The method according to claim 3, wherein clustering each dialogue content based on the semantic feature vector of each dialogue content and determining each dialogue topic comprises:
computing a semantic relevance between different dialogue contents based on the semantic feature vector of each dialogue content; and
determining each continuous dialogue content under an identical dialogue topic based on the semantic relevance, and determining topic information of the identical dialogue topic based on each continuous dialogue content, wherein the semantic relevance between continuous dialogue contents under the identical dialogue topic is greater than a set threshold value.

5. The method according to claim 1, wherein displaying, in response to the view operation on the historical dialogue record in the dialogue page, at least one dialogue topic corresponding to the historical dialogue record comprises:
in response to the view operation on a historical dialogue record identifier in the dialogue page, displaying a dialogue topic window, and sequentially displaying each dialogue topic in the dialogue topic window according to an attribute feature of each dialogue topic, wherein the attribute feature comprises at least one of: dialogue time, topic popularity, and user search data.

6. The method according to claim 1, wherein locating, in response to the triggering operation for any dialogue topic, the current dialogue position in the dialogue page to the position corresponding to the dialogue topic in the historical dialogue record comprises:
in response to the triggering operation for any dialogue topic, sequentially displaying, at a current displayable region in the dialogue page, each dialogue content under the dialogue topic starting from a first dialogue content under the dialogue topic.

7. The method according to claim 1, wherein displaying at least one dialogue topic corresponding to the historical dialogue record comprises:
displaying at least one dialogue topic corresponding to the historical dialogue record, and dialogue time information and/or number of dialogue contents corresponding to each dialogue topic, wherein the dialogue time information is used for indicating dialogue starting time or a dialogue time range corresponding to the dialogue topic.

8. An information display apparatus, comprising:
a first display unit, configured to display a dialogue page for a dialogue between a user and an intelligent robot, wherein the dialogue page comprises a historical dialogue record;
a second display unit, configured to display, in response to a view operation on the historical dialogue record in the dialogue page, at least one dialogue topic corresponding to the historical dialogue record, wherein each dialogue topic corresponds to at least one dialogue content; and
a locating unit, configured to locate, in response to a triggering operation for any dialogue topic, a current dialogue position in the dialogue page to a position corresponding to the dialogue topic in the historical dialogue record.

9. A computer device, comprising a processor, a memory, and a bus,
wherein the memory stores machine-readable instructions executable by the processor,
when the computer device is in operation, the processor is communicated with the memory through the bus, and
the machine-readable instructions, when executed by the processor, are configured to execute the information display method according to any one of claims 1 to 7.

10. A computer-readable storage medium, wherein the computer-readable storage medium stores a computer program, and the computer program, when executed by a processor, is configured to execute the information display method according to any one of claims 1 to 7.
